# FASCICULE DE BREVET EUROPEEN

(11) **EP 3 889 459 B1**
(45) Date de publication et mention de la délivrance du brevet: **06.12.2023**
(21) Numéro de dépôt: 21164508.0
(22) Date de dépôt: 24.03.2021
(51) Int. Cl.: F16F 15/123, F16F 15/129

(54) **DISQUE DE FROTTEMENT POUR AMORTISSEUR DE TORSION**
REIBSCHEIBE FÜR TORSIONSDÄMPFER
FRICTION DISC FOR VIBRATION DAMPER

(30) Priorité: 31.03.2020 FR 2003172
(43) Date de publication de la demande: 06.10.2021
(73) Titulaire: VALEO EMBRAYAGES, 80009 Amiens (FR)
(72) Inventeur: DAEL, Dominique, 95892 CERGY PONTOISE (FR)
(74) Mandataire: Valeo Powertrain Systems

(56) Documents cités:
- WO-A2-2009/007642
- FR-A1- 3 068 410

## Description

L'invention a trait au domaine de la transmission de couple dans les dispositifs motorisés et concerne les embrayages. La présente invention concerne un dispositif de frottement pour amortisseur de torsion. Elle concerne également un amortisseur de torsion comprenant un tel dispositif de frottement, et notamment un disque d'embrayage comprenant un tel amortisseur de torsion.

Les véhicules motorisés peuvent être pourvus d'un embrayage disposé entre le moteur et la transmission. Cet embrayage comporte typiquement un mécanisme d' embrayage et un disque d' embrayage qui présente un organe périphérique de transmission de couple (par exemple un disque de friction) et un organe central de transmission de couple (par exemple un moyeu). Lorsque l'embrayage est en mode embrayé, le moteur est relié à la transmission par le disque d'embrayage. L'organe périphérique de transmission de couple est alors généralement pincé par le mécanisme d'embrayage de sorte à être entraîné par la rotation du moteur, et l'organe central de transmission de couple est solidaire en rotation d'un élément de la transmission, tel que l'arbre d'entrée de la boîte de vitesse du véhicule. Lorsque l'embrayage est commandé vers sa positon débrayée, le mécanisme d'embrayage libère le disque d'embrayage et le moteur est découplé de la transmission.

En plus de sa fonction d'accouplement du moteur et de la transmission, le disque d'embrayage remplit généralement des fonctions supplémentaires liées au filtrage des acyclismes du moteur et autres oscillations de torsion. Ce filtrage est typiquement réalisé par un amortisseur de torsion travaillant en torsion et permettant un amortissement des acyclismes et un mouvement de rotation relative entre l'organe périphérique de transmission de couple et l'organe central de transmission de couple.

Un tel dispositif comprend typiquement un dispositif de frottement doté de rondelles de frottement mises en charge axiale par des rondelles élastiques, de sorte à dissiper par frottement l'énergie accumulée dans les ressorts. Lors de la conception d'un dispositif de frottement de disque d'embrayage, une attention particulière est portée :
- sur la fiabilité de l'immobilisation en rotation des rondelles les unes par rapport aux autres et par rapports aux différents éléments tournants du disque d'embrayage;
- sur la charge exercée par les rondelles élastiques ;
- sur l'encombrement, notamment axial.

Un dispositif de frottement comprend typiquement une rondelle de frottement dotée d'éléments d'arrêt en rotation (par exemple des pattes) montés solidaire en rotation de l'organe d'entrée de couple ou de l'organe de sortie de couple de l'amortisseur de torsion. Dans ce cas, des orifices sont affectés spécifiquement sur l'organe d'entrée ou l'organe de sortie pour recevoir les éléments d'arrêt de la rondelle de frottement de façon à la monter solidaire en rotation de l'organe d'entrée de couple ou de l'organe de sortie de couple de l'amortisseur de torsion. Or, cet organe comprend déjà des évidements pour le logement des ressorts et il est aussi souvent nécessaire de prévoir d'autres trous pour le montage d'organes de fixation (par exemple des rivets de fixations lorsque l'organe est composé de deux rondelles de guidage solidaires en rotation l'une de l'autre et/ou lorsque cet organe porte le disque de friction). Il y a donc peu de place disponible pour réaliser les orifices de blocage en rotation de la rondelle de frottement. La rondelle de frottement comprend donc un nombre limité d'éléments d'arrêt en rotation.

Dans le document FR3068410 A1, il est aussi divulgué une rondelle de frottement montée solidairement en rotation avec la rondelle élastique, par l'intermédiaire de pattes d'arrêt issues de la rondelle de frottement et qui sont insérées dans des ouvertures situées sur les excroissances d'appui de la rondelle élastique. Cependant, dans cette solution le nombre d'élément d'arrêts de la rondelle de frottement, leur forme et leur positionnement dépend fortement de la géométrie de la rondelle élastique. Le nombre limité d'ouvertures dans la rondelle élastique restreint dès lors le nombre de pattes disponibles pour l'arrêt en rotation de la rondelle de frottement par rapport à la rondelle élastique.

Un nombre limité de pattes d'arrêt en rotation peut conduire à une rupture prématurée desdites pattes d'arrêt ou à configurer le dispositif de frottement avec un couple de frottement limité.

Un nombre important d'orifices sur un composant peut le fragiliser.

Par ailleurs, dans l'art antérieur, l'appui des rondelles élastiques se fait souvent radialement à l'intérieur des ressorts, ce qui limite la charge élastique disponible et le couple de frottement.

L'invention a pour but d'améliorer les disques d'embrayage de l'art antérieur.

A cet effet, l'invention vise un dispositif de frottement, pour un amortisseur de torsion comprenant un premier élément tournant et un deuxième élément tournant mobiles en rotation l'un par rapport à l'autre autour d'un axe de rotation X et des ressorts configurés pour s'opposer à une rotation relative entre le premier élément tournant et le deuxième élément tournant par rapport à l'axe de rotation X, le dispositif de frottement comprenant :
- le premier élément tournant comprenant des évidements agencés chacun pour recevoir au moins un ressort de l'amortisseur de torsion,
- une rondelle élastique de charge et une rondelle de frottement,
l'une au moins parmi la rondelle élastique et la rondelle de frottement comprend des pattes d'entrainement montées solidairement en rotation du premier élément tournant, caractérisé en ce que au moins l'une des pattes d'entrainement est insérée dans l'un des évidements du premier élément tournant.

Ainsi en utilisant les évidements logeant les ressorts, il n'est plus nécessaire de faire des perçages dédiés exclusivement à l'arrêt en rotation, ce qui ne fragilise pas le premier élément tournant. Les évidements combinent ainsi plusieurs fonctions, en plus du logement desdits ressorts.

L'utilisation de ces évidements permet aussi d'augmenter le nombre de pattes d'entrainement en rotation sans fragiliser l'élément tournant. Ce nombre élevé de pattes évite leur usure prématurée, et permet de transmettre un plus grand couple de frottement.

Ainsi, la rondelle de frottement et/ou la rondelle élastique est moins sujet à une rupture de ses pattes d'entrainement. La forme de la rondelle de frottement ou de la rondelle élastique peut être simplifiée, sans étape additionnelle de perçage. Leur rigidité est préservée.

De plus, en insérant des pattes d'entrainement dans les évidements du premier élément tournant, elles sont situées plus loin de l'axe de rotation que dans l'art antérieure et il est possible en conséquence d'agrandir radialement la rondelle élastique, et donc la charge élastique et le couple de frottement.

Le dispositif de frottement peut former un sous-ensemble unitaire compact, qui facilite le montage du disque de friction et notamment sa manipulation par l'opérateur.

Le dispositif de frottement peut comporter les caractéristiques additionnelles suivantes, pouvant être prises seules ou en combinaison :
- La rondelle élastique de charge et la rondelle de frottement peuvent être positionnées d'un même côté du premier élément tournant ;
- Chaque patte d'entrainement peut être insérée dans l'un des évidements du premier élément tournant. Chaque évidement du premier élément tournant peut recevoir au moins une patte d'entraînement ;
- L'évidement peut avoir un contour de type fermé, formant par exemple une fenêtre ;
- En variante, l'évidement peut avoir un contour de type ouvert, par exemple débouchant radialement sur l'extérieur dudit dispositif de frottement, autrement dit en direction opposée audit axe de rotation X ;
- Ladite au moins une parmi la rondelle élastique et la rondelle de frottement peut comprendre entre 2 et 25 pattes d'entrainement de préférence entre 4 et 12, par exemple 12 pattes d'entrainement ;
- Les pattes d'entraînement peuvent être identiques, ce qui simplifie par exemple la fabrication d'une telle rondelle. En variante, au moins deux pattes d'entrainement peuvent être différentes ;
- Avantageusement, ladite au moins une patte d'entrainement présente une tranche comprenant une surface d'appui en appui contre le premier élément tournant ;
- Ladite au moins une parmi la rondelle élastique et la rondelle de frottement peut être issue d'une tôle métallique découpée. Les pattes d'entrainement peuvent être obtenues par emboutissage ou pliage de la tôle découpée. De cette manière, l'emboutissage ou le pliage permet la réalisation de pattes ayant des formes simples ou complexes, sans perte de matière. Alternativement ou en complément, la surface d'appui de la patte d'entrainement peut être obtenue par usinage ;
- Les pattes d'entrainement peuvent être disposées sur le diamètre extérieur de ladite au moins une parmi la rondelle élastique et la rondelle de frottement ;
- Les pattes d'entrainement peuvent être réparties suivant une répartition régulière ;
- Chaque patte d'entrainement peut s'étendre selon une direction circonférentielle sur une valeur angulaire comprise entre 2° et 45° ;
- De manière préférée, chaque patte d'entrainement qui est insérée dans l'un des évidements peut être en appui circonférentiel contre un bord de l'évidement, de manière à solidariser en rotation ladite au moins une parmi la rondelle élastique et la rondelle de frottement avec le premier élément tournant dans un premier sens de rotation relative ;
- De manière avantageuse, l'un au moins des évidements peut comprendre :
   - un bord radialement intérieur,
   - deux bords latéraux,
   et dans lequel au moins une portion du bord radialement intérieur ou une portion de l'un des bords latéraux délimite une cavité recevant l'une des pattes d'entrainement ;

Par « cavité », on entend une portion creuse, faisant partie de l'évidement mais dépourvue de ressort, qui est apte à recevoir une patte d'entrainement;
- Au moins l'une des cavités peut être de forme rectangulaire, par exemple une rainure ou une gorge ;
- Au moins l'une des cavités peut être de forme concave, par exemple en arc de cercle ou de demi-lune.

Toute forme de cavité est possible, à condition qu'elle s'étend avantageusement au plus près de la patte d'entrainement qu'elle reçoit, par exemple en l'encerclant, pour assurer un meilleur ajustement glissant ;
- Dans le cas d'un bord latéral, au moins l'une des cavités peut être disposée sur une zone d'extrémité radialement interne du bord latéral. Alternativement, au moins l'une des cavités peut être disposée sensiblement sur une zone centrale du bord latéral de l'évidement ;
- Dans le cas d'un bord radialement intérieur, au moins l'une des cavités peut être disposée sur une zone centrale du bord radialement intérieur de l'évidement. Plus précisément, chaque évidement peut comprendre au moins une cavité formée sur la zone centrale dudit bord radialement intérieur. Alternativement, au moins l'une des cavités peut être disposée sur une zone d'extrémité du bord radialement intérieur ;

On entend par « zone centrale » une zone s'étendant sur environ 30% de la longueur séparant les deux extrémités dudit bord et située entre les deux extrémités dudit bord. En particulier, ladite zone est située équidistant aux deux extrémités dudit bord.
- En d'autres termes, le centre du bord radialement intérieur d'au moins l'un des évidements peut être traversé par un axe central, perpendiculaire à l'axe X de rotation. Ladite cavité peut s'étendre circonférentiellement de part et d'autre de l'axe central dudit bord radialement intérieur, en particulier selon une répartition symétrique de part et d'autre dudit axe central. Dès lors, l'axe central définit l'axe de symétrie de ladite cavité ;
- Chaque patte d'entrainement peut être de forme complémentaire à celle de la cavité de l'évidement correspondant. Une telle complémentarité de forme présente l'avantage d'un ajustement glissant plus précis, notamment avec un jeu minimal uniquement prévu pour le montage. A titre d'exemple, un jeu de montage J peut être ménagé entre la cavité et la patte d'entrainement, afin de faciliter l'insertion de la patte d'entrainement dans la cavité ;
- Selon un mode de réalisation, lesdites pattes d'entrainement peuvent être réparties par groupes de pattes, chaque groupe de patte comprenant :
   - d'une part une première patte agencée pour solidariser en rotation ladite au moins une parmi la rondelle élastique et la rondelle de frottement avec le premier élément tournant uniquement dans le premier sens de rotation relative,
   - d'autre part une deuxième patte agencée pour solidariser en rotation ladite au moins une parmi la rondelle élastique et la rondelle de frottement avec le premier élément tournant uniquement dans un deuxième sens de rotation relative opposé au premier sens de rotation relative ;
- En d'autres termes, chaque paire de patte peut avoir, d'une part, une première patte d'entrainement en appui contre un bord latéral d'un premier évidement pour assurer le blocage en rotation dans l'un des sens de rotation, et d'autre part, une deuxième patte d'entrainement en appui contre un bord latéral d'un deuxième évidement voisin du premier évidement pour assurer le blocage en rotation dans l'autre des sens de rotation ;
- Dans un cas particulier, deux pattes d'entrainement adjacentes et insérées dans un même évidemment peuvent être ins crites dans un même plan P. Le plan P peut être parallèle à l'axe de rotation X.
- De manière préférée, le premier élément peut comprendre une pluralité de bras, chaque bras séparant deux évidements adjacents ;
- Alternativement ou en complément, au moins une des pattes d'entrainement peut être disposée dans un évidement du premier élément tournant, ladite patte d'entrainement étant agencée d'une part, pour solidariser en rotation ladite au moins une parmi la rondelle élastique et la rondelle de frottement avec ledit évidement dans le premier sens de rotation relative, et également d'autre part, pour solidariser en rotation ladite au moins une parmi la rondelle élastique et la rondelle de frottement avec ledit évidement dans un deuxième sens de rotation relative opposé au premier sens de rotation relative.
- Selon un premier exemple, ladite patte d'entraînement assurant à la fois le blocage en rotation dans les deux sens de rotation relatives opposés, peut être reçue dans une cavité délimitée avec un premier bord latéral. Dès lors, ladite patte d'entrainement peut être, d'une part, en appui contre un premier bord latéral d'un évidement pour assurer le blocage en rotation dans l'un des sens de rotation, et d'autre part, en appui contre un contour de ladite cavité correspondante, qui est préférentiellement opposée audit premier bord latéral de l'évidement ;
- Selon un deuxième exemple, ladite patte d'entrainement assurant à la fois le blocage en rotation dans les deux sens de rotation relatives opposés, peut être délimité entre un premier bord latéral et un deuxième bord latéral dudit évidemment correspondant. Dès lors, ladite patte d'entrainement peut être, d'une part, en appui contre un premier bord latéral d'un évidement pour assurer le blocage en rotation dans l'un des sens de rotation, et d'autre part, en appui contre un deuxième bord latéral dudit évidement pour assurer le blocage en rotation dans l'autre des sens de rotation.
- De manière avantageuse, une des pattes d'entrainement peut être ajustée circonférentiellement dans la cavité correspondante de manière à
   d'une part, solidariser en rotation ladite au moins une parmi la rondelle élastique et la rondelle de frottement avec le premier élément tournant dans le premier sens de rotation relative, et
   d'autre part, solidariser en rotation ladite au moins une parmi la rondelle élastique et la rondelle de frottement avec le premier élément dans un deuxième sens de rotation relative opposé au premier sens de rotation relative.
- De manière préférée, au moins une pluralité de pattes d'entrainement assure à la fois le blocage en rotation dans les deux sens de rotation relatives opposés.
- La rondelle élastique comprend une partie annulaire et une pluralité d'excroissances prenant appui contre le premier élément tournant. Les excroissances peuvent se développer radialement vers l'extérieur depuis la partie annulaire. De préférence, chaque excroissance peut être en appui sur l'un des bras. De cette manière, la rondelle élastique peut prendre appui sur le premier élément tournant et exercer une charge sur la rondelle de frottement ;
- L'appui des excroissances peut être radialement à l'extérieur des pattes d'entrainement. On éloigne radialement l'appui des excroissances de celui des pattes d'entrainement, ce qui définit une amplitude radiale plus importante entre les différents points d'appuis. La performance de la rondelle élastique est améliorée ;
- L'appui des excroissances peut être disposé au niveau des bras, de sorte à éloigner cet appui le plus loin possible des pattes d'entrainement et de l'axe X de rotation ;
- Par exemple, l'appui des excroissances peut être disposé radialement sur une zone centrale des bras ;
- En variante, l'appui des excroissances peut être disposé sur la périphérie radialement externe des bras ;
- Au moins un bras peut comprendre un embouti formé au niveau de la zone centrale ou au-delà de la zone centrale du bras. L'embouti peut s'étendre au-delà des excroissances. L'avantage d'un tel embouti est de venir comprimer les ressorts, notamment les ressorts intérieurs, et/ou de centrer lesdites excroissances ;
- De préférence, chaque bras peut comprendre un embouti ;
- Chaque excroissance peut présenter une largeur sensiblement égale à la largeur du bras. L'appui des excroissances peut s'étendre partiellement sur l'une des parties de la largueur desdits bras ;

On entend par « largeur » la dimension prise dans la direction circonférentielle.

La rondelle élastique peut être du type rondelle Belleville.
- Selon un premier mode de réalisation, ladite au moins une patte d'entrainement insérée dans l'un des évidements du premier élément tournant peut être formée sur la rondelle de frottement. Autrement dit, la rondelle de frottement peut comprendre lesdites pattes d'entrainement. En d'autres termes, lesdites pattes d'entrainement appartiennent à la rondelle de frottement.
- La rondelle de frottement comprend une portion annulaire agencée sur un plan perpendiculaire à l'axe de rotation X. La surface de frottement peut être formée sur cette portion annulaire, sur la face située en direction opposée à la rondelle élastique.
- Les pattes d'entrainement s'étendent axialement depuis la portion annulaire de la rondelle de frottement. Dans une telle situation, les pattes d'entrainement peuvent être issues de matière avec la portion annulaire de la rondelle de frottement. Alternativement, les pattes d'entraînement peuvent être rapportées sur la portion annulaire de la rondelle de frottement, par exemple par soudage ou coopération de formes ;
- Selon un autre mode de réalisation, ladite au moins une patte d'entrainement insérée dans l'un des évidements du premier élément tournant peut être formée sur la rondelle élastique. Autrement dit, la rondelle élastique peut comprendre lesdites pattes d'entrainement. En d'autres termes, lesdites pattes d'entrainement appartiennent à la rondelle élastique.
- De manière avantageuse, chaque excroissance de ladite rondelle élastique peut comprend au moins une patte d'entrainement. De cette manière, l'au moins une patte d'entraînement peut être disposée entre les diamètres intérieur et extérieur de l'excroissance, notamment en se développant depuis l'un des bords latéraux de l'excroissance ;
- Dans une telle situation, les pattes d'entrainement peuvent être issues de matière avec la partie annulaire de la rondelle élastique. Alternativement, les pattes d'entrainement peuvent être rapportées sur la partie annulaire de la rondelle élastique, par exemple par soudage ou coopération de formes ;

L'invention a également pour objet, un amortisseur de torsion comprenant :
- un dispositif de frottement reprenant tout ou partie des caractéristiques mentionnées précédemment,
- un deuxième élément tournant monté mobile en rotation autour d'un axe de rotation X par rapport au premier élément tournant du dispositif de frottement,
- des ressorts agencés dans les évidements du premier élément tournant et configurés pour s'opposer à une rotation relative entre le premier élément tournant et le deuxième élément tournant par rapport à l'axe de rotation X,
dans lequel la rondelle de frottement du dispositif de frottement est agencée pour frotter directement ou indirectement contre le deuxième élément tournant lors d'une rotation relative entre le premier élément tournant et le deuxième élément tournant.

Un tel amortisseur de torsion selon l'invention présente l'avantage de transmettre un plus grand couple de frottement, tout en réduisant son encombrement. Ses composants s'usent de manière moins rapide. La fabrication et le montage d'un tel amortisseur sont simplifiés.

L'invention sera mieux comprise à la lecture de la description qui va suivre, donnée uniquement à titre d'exemple et faite en se référant aux dessins annexés dans lesquels :
- La [Fig. 1] est une vue éclatée en perspective d'un disque d'embrayage comprenant un dispositif de frottement selon un premier mode de réalisation de l'invention ;
- La [Fig. 2] est une vue en coupe d'un disque d'embrayage selon le premier mode de réalisation illustrée à la figure [Fig. 1] ;
- La [Fig. 3] est une vue en perspective éclatée du dispositif de frottement seul selon le premier mode de réalisation illustrée à la figure [Fig. 1] ;
- La [Fig. 4] est une vue détaillée de dessous du dispositif de frottement selon le premier mode de réalisation illustrée à la figure [Fig. 3] ;
- La [Fig. 5] est une vue détaillée du dessus du dispositif de frottement selon le premier mode de réalisation illustrée à la figure [Fig. 3] ;
- La [Fig. 6] est une vue en perspective du dispositif de frottement seul selon un deuxième mode de réalisation de l'invention;
- La [Fig. 7] est une vue détaillée du dessus du dispositif de frottement selon le deuxième mode de réalisation illustrée à la figure [Fig. 6] ;
- La [Fig. 8] est une vue en perspective du dispositif de frottement seul selon un troisième mode de réalisation de l'invention;

Dans la description et les revendications, on utilisera, les termes "externe" et "interne" ainsi que les orientations "axiale" et "radiale" pour designer, selon les définitions données dans la description, des éléments de l'amortisseur de torsion et du dispositif de frottement. Par convention, l'axe (X) de rotation des composants détermine l'orientation "axiale". L'orientation "radiale" est dirigée orthogonalement a l'axe de rotation (X). L'orientation "circonférentielle" est dirigée orthogonalement à l'axe de rotation de l'amortisseur de torsion et orthogonalement a la direction radiale. Ainsi, un élément décrit comme se développant circonférentiellement est un élément dont une composante se développe selon une direction circonférentielle. Les termes "externe" et "interne" sont utilisés pour définir la position relative d'un élément par rapport à un autre, par référence à l'axe de rotation de l'amortisseur de torsion, un élément proche de l'axe est ainsi qualifie d'interne par opposition à un élément externe situe radialement en périphérie

Par ailleurs, les angles et secteurs angulaires exprimés sont définis en relation avec l'axe de rotation X.

Par « véhicule », on entend les véhicules automobiles, qui comprennent non seulement les véhicules passagers, mais également les véhicules industriels, ce qui comprend notamment les poids lourds, les véhicules de transport en commun ou les véhicules agricoles, mais également tout engin de transport permettant de faire passer d'un point à un autre un être vivant et/ou un objet.

Sauf indication contraire, les verbes « comporter », « présenter » ou « comprendre » doivent être interprétés de manière large, c'est-à-dire non limitative.

Sur les différentes FIGURES, des références identiques sont utilisées pour désigner des pièces identiques ou analogues. En particulier toutes les variantes et tous les modes de réalisation décrits sont combinables entre eux si rien ne s'oppose à cette combinaison sur le plan technique.

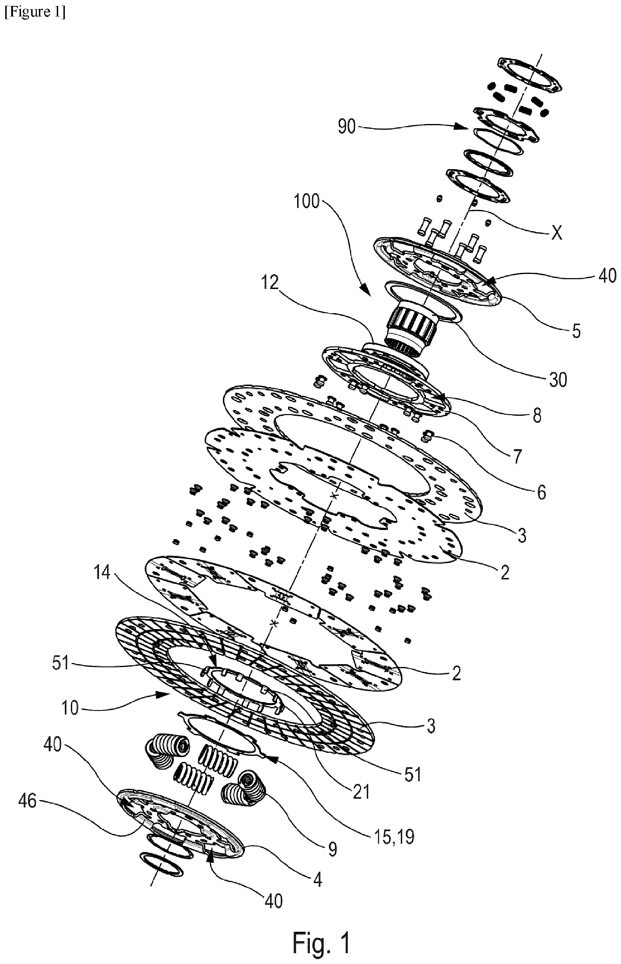

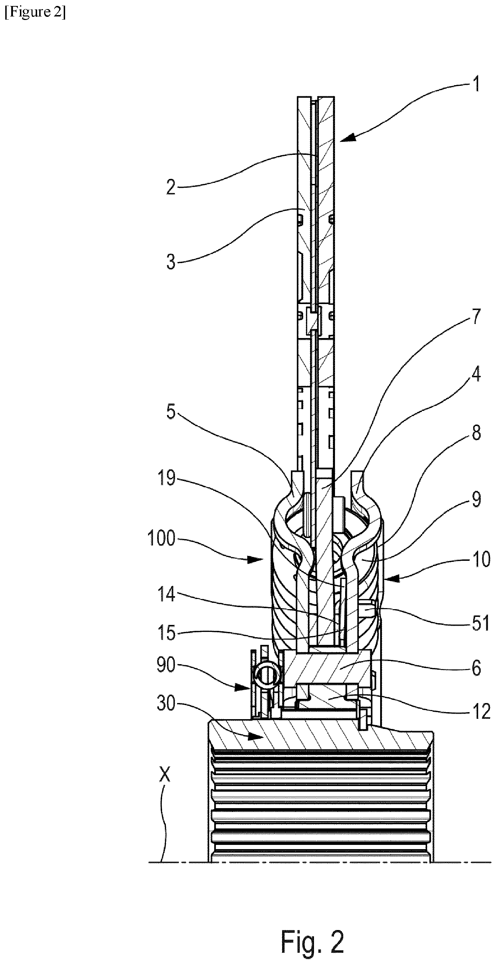

On a représenté sur les FIGURES 1 à 5 un premier mode de réalisation du dispositif de frottement 10. Les FIGURES 1 et 2 représentent respectivement des vues en perspective et en coupe d'un disque d'embrayage 1 destiné, dans les présents exemples, à un poids lourd.

Le disque d'embrayage 1 est prévu pour relier le moteur et la transmission d'un véhicule automobile. Il comporte un organe périphérique de transmission de couple, constitué ici d'un disque de friction doté d'un disque de progressivité 2 et de garnitures de friction 3, ainsi qu'un organe central de transmission de couple, constitué ici d'un moyeu 30. Les garnitures de friction 3 sont fixées contre les deux faces opposées du disque de progressivité 2. Le moyeu 30 présente des cannelures internes destinées à coopérer avec des cannelures d'un arbre d'entrée de boîte de vitesses.

Le disque d'embrayage 1 comporte également un amortisseur de torsion 100 transmettant le couple entre le disque de friction et le moyeu 30. L'amortisseur de torsion 100 comprend un premier élément tournant 4 et un deuxième élément tournant 7 mobiles en rotation l'un par rapport à l'autre autour d'un axe de rotation X et des ressorts 9 configurés pour s'opposer à une rotation relative entre le premier élément tournant 4 et le deuxième élément tournant 7.

A titre d'exemple, les ressorts 9 d'un amortisseur de torsion peuvent être de dimensions différentes :
- certains des ressorts 9, dit ressorts extérieurs, sont alors répartis suivant une première série de ressorts ;
- d'autres parmi les ressorts 9, dits ressorts intérieurs, sont répartis suivant une deuxième série de ressorts, la deuxième série de ressorts étant alors située à l'intérieur de ladite première série de ressorts.

Le premier élément tournant 4, comprend une rondelle latérale 4 montée solidaire en rotation d'une autre rondelle latérale grâce à des entretoises 6. Ces entretoises 6 sont réparties circonférentiellement autour de l'axe de rotation X. Ces rondelles latérales 4 et 5 sont maintenues parallèles et distantes l'une de l'autre de part et d'autre d'un moyeu intermédiaire 12 qui est traversé lui aussi par les entretoises 6.

Le deuxième élément tournant comprend un disque central 7 qui est agencé axialement entre les rondelles latérales 4, 5. Le disque de friction est fixé sur le disque central 7. Les rondelles latérales 4, 5 et le disque central 7 forment conjointement des logements 8 se développant circonférentiellement. Des ressorts 9 de l'amortisseur de torsion sont logés dans lesdits logements 8. Les logements sont formés par des évidements 40 des rondelles latérales 4, 5 et par des évidements du disque central 7. Lorsque l'amortisseur100 est dans sa position relative de repos, les évidements du disque central 7 et des rondelles latérales 4, 5 se font face axialement. Les ressorts 9 s'étendent entre des surfaces d'appui portées par les rondelles latérales 4, 5 et par le disque central 7. Ces ressorts sont configurés pour s'opposer à une rotation relative entre les rondelles latérales 4, 5 et le disque central 7 autour de l'axe de rotation X. Ils sont aussi destinés à transmettre la rotation entre les rondelles latérales 4, 5 et le disque central 7.

Le disque d'embrayage 1 comporte, en outre, un dispositif de frottement 10, qui comprend la rondelle latérale 4 (ou premier élément tournant), une rondelle élastique 15 de charge et une rondelle de frottement 14 qui sont disposées d'un même côté de la rondelle latérale 4. La rondelle de frottement 14 et la rondelle élastique 15 de charge sont solidaires en rotation de la rondelle latérale 4.

La rondelle de frottement 14 et la rondelle élastique 15 de charge sont superposées l'une sur l'autre selon l'axe X, de sorte que la rondelle de frottement 14 vient en contact avec une face de frottement du disque central 7.

Dans les exemples illustrés, la rondelle élastique 15 de charge et la rondelle de frottement 14 sont montées de façon coaxiales avec la rondelle latérale 4 qui a sensiblement le même axe de rotation que le moyeu 30 de sortie. La rondelle élastique 15 de charge est comprimée axialement entre la rondelle latérale 4 et une portion annulaire 140 de frottement de la rondelle de frottement 14.

La rondelle élastique 15 de charge exerce alors une charge axiale entre la rondelle de frottement 14 et la rondelle latérale 4, de sorte que, la rondelle de frottement 14 soit sollicitée contre la face de frottement du disque central 7. Le contour interne 17 de la rondelle latérale 4 entoure le moyeu 30 et ce dernier peut tourner par rapport aux rondelles latérales 4, 5 lorsque les ressorts du pré amortisseur 90 se compriment.

La rondelle latérale 4 présente, en outre des évidements 40 recevant les éléments élastiques ou ressorts 9, des orifices 11 de fixation pour les rivets 6. Dans les exemples illustrés, la rondelle latérale 4 comprend six évidements 40 et six bras 46 répartis alternativement et de manière régulière autour de l'axe de rotation X, par exemple de formes et de tailles identiques.

De manière avantageuse, chaque évidement 40 comprend, en outre, un bord radialement intérieur 41, proche de l'axe X, ainsi que deux bords latéraux 43 et 44 disposés de part et d'autre dudit bord radialement intérieur 41. Ainsi, en fonctionnement, une première extrémité de chaque organe élastique 9 est en appui circonférentiel contre le disque central 7 et une seconde extrémité, opposée à la première extrémité, de chaque organe élastique 9 est en appui contre les rondelles latérales 4, 5, notamment en appui sur les deux bords latéraux 43 et 44 de l'évidements 40 correspondant.

La rondelle latérale 4 comprend, en outre, une pluralité de bras 46, ici six bras 46 qui sont répartis angulairement régulièrement autour de l'axe de rotation X. Chaque bras 46 sépare deux évidements 40 adjacents. Autrement dit, chaque bras 46 s'étend circonférentiellement entre deux bords latéraux 43 et 44 opposés de deux évidements 40 adjacents. De manière préférée, chaque bras 46 est une portion pleine ou évidée se développant radialement vers l'extérieur en reliant deux parties radialement interne et externe de la rondelle latérale 4.

Dans les exemples illustrés, l'évidement 40 a un contour de type fermé, formant par exemple une fenêtre, notamment avec un bord radialement extérieur 42, disposé entre lesdits deux bords latéraux 43 et 44. Ledit bord radialement extérieur 42, éloigné de l'axe X, est sensiblement de même dimension que ledit bord radialement intérieur 41. Autrement dit, les bord radialement intérieur 41 et extérieur 42 forment avec lesdits deux bords latéraux 43 et 44 un évidement 40 sensiblement de forme rectangulaire ou parallélépipédique.

En variante non illustrée, l'évidement 40 peut avoir un contour de type ouvert. Par exemple, l'évidement 40 peut déboucher radialement sur l'extérieur dudit dispositif de frottement, autrement dit en direction opposée audit axe de rotation X.

La rotation relative possible entre le disque de progressivité 2 et la rondelle latérale 4, qui tend à comprimer les ressorts 9 intercalés dans les logements 8, 40, entraine également une rotation relative de la rondelle de frottement 14 par rapport au disque central 7 et, par conséquent, un frottement de la rondelle de frottement 14 sur la face de frottement du disque central sous une charge déterminée par la rondelle élastique 15 de charge.

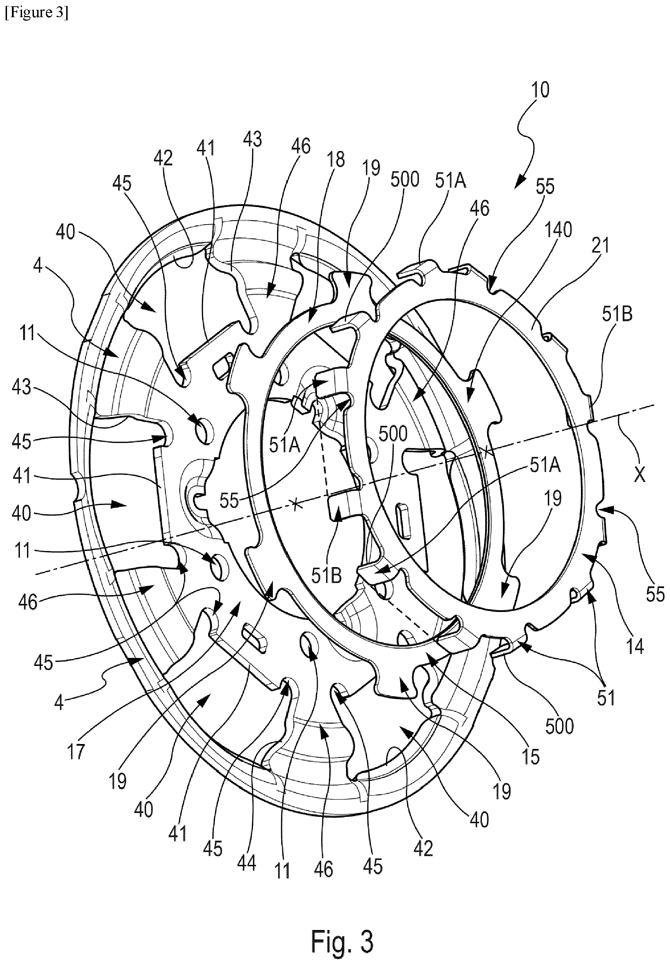

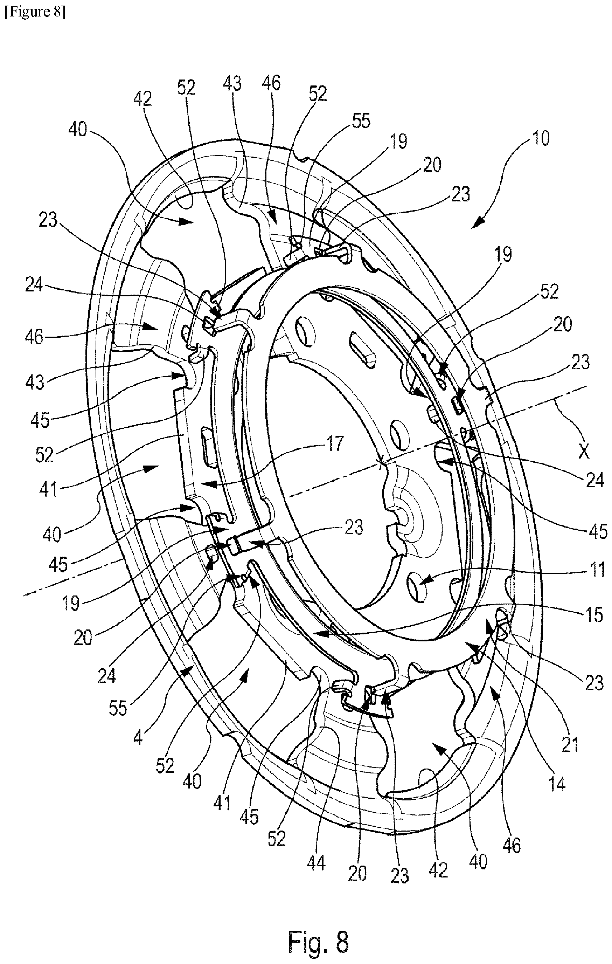

La rondelle de frottement 14, illustrée notamment aux FIGURES 3 et 8, comporte une portion annulaire de frottement 21 ayant sensiblement une forme de disque et destinée à venir au contact de la face de frottement du disque central 7. Lors de la rotation relative du disque central 7 par rapport aux rondelles latérales 4, 5, le frottement a lieu entre la portion annulaire de frottement 21 de la rondelle de frottement 14 et le disque central 7.

Les FIGURES 3 et 8 représentent en perspective la rondelle élastique 15 de charge surmontée de la rondelle de frottement 14. La rondelle élastique 15 de charge présente une portion annulaire de contact 18 et, dans les présents exemples, six excroissances 19 qui s'étendent à partir de la portion annulaire de contact 18. Cette pluralité d'excroissances 19 prend appui contre la rondelle latérale 4.

Dans les exemples illustrés, les excroissances 19 sont angulairement régulièrement réparties sur le contour externe de la portion annulaire de contact 18. De préférence, les excroissances 19 se développent radialement vers l'extérieur. Une excroissance 19 peut être une portion pleine de la rondelle élastique, comme illustrée aux premier et deuxième modes de réalisation, ou une portion évidée, comme illustrée au troisième mode de réalisation.

Chaque excroissance 19 est en appui sur l'un des bras 46 de la rondelle latérale 4. La portion annulaire de contact 18 a sensiblement la forme d'un disque destiné à venir exercer une pression sur la rondelle de frottement 14. De préférence, chaque excroissance 19 est disposée entre deux évidements 40 adjacents et elle est délimitée entre les bords latéraux 43, 44 desdits deux évidements 40 adjacents.

La rondelle élastique 15 de charge est constituée d'un matériau choisi pour ses propriétés élastiques, par exemple un acier, et a par exemple une forme sensiblement tronconique pour pouvoir remplir sa fonction de ressort axial. Dans les exemples illustrés, la rondelle élastique 15 de charge est issue d'une tôle métallique découpée. Préférentiellement, la portion annulaire de contact 18 est du côté de la pointe du cône tandis que les excroissances 19 sont du côté de la base du cône, ce qui implique que les excroissances 19 s'étendent radialement vers l'extérieur de la rondelle élastique 15 de charge.

La rondelle élastique 15 de charge s'appuie par ses excroissances 19 sur le rondelle latérale 4, et s'appuie par sa portion annulaire de contact 18 sur la rondelle de frottement 14. Cette dernière s'appuie quant à elle sur le disque central 7. La rondelle élastique 15 de charge presse donc la rondelle de frottement 14 contre le disque central en s'appuyant, grâce à ses excroissances 19, contre la rondelle latérale 4.

La rondelle de frottement 14, la rondelle élastique 15 de charge et la rondelle latérale 4 du premier élément tournant sont solidaires en rotation, selon plusieurs variantes, par l'intermédiaire de pattes d'entrainement 51, 5 1A, 51B, 52. Selon les premier et deuxième modes de réalisation des FIGURES 1 à 7, chaque patte d'entrainement 51, 51A, 51B est formée sur la rondelle de frottement 14. Lesdites pattes d'entrainement 51, 51A, 51B sont toutes issues de matière avec la rondelle de frottement 14 et elles sont insérées dans l'un des évidements 40 de la rondelle latérale 4.

Les pattes d'entrainement 51, 51A, 51B ou 52 sont insérées dans des évidements 40 de la rondelle latérale 4, ce qui assure un arrêt en rotation. De préférence, chaque patte d'entrainement 51, 52 est insérée dans l'un des évidements 40. Dès lors, la rondelle élastique 15 de charge et la rondelle de frottement 14 sont solidaires en rotation de la rondelle latérale 4. Plus précisément, les deux rondelles 14, 15 sont en appui l'une sur l'autre et peuvent être maintenues sur le premier élément tournant 4 en formant un sous ensemble grâce à des ergots (non représentés) empêchant les pattes d'entraînement de ressortir axialement de leur évidement.

Par ailleurs, les bras 46 de la rondelle latérale 4 se développent radialement à l'extérieur des pattes d'entraînement 51, 51A, 51B, 52. Les excroissances 19 de la rondelle élastique 15 de charge se développent radialement au-delà des pattes d'entraînement 51, 51A, 51B, 52. De ce fait, l'appui des excroissances 19 est localisé radialement à l'extérieur par rapport aux pattes d'entrainement 51, 51A, 51B, 52.

De manière avantageuse, l'appui des excroissances 19 est distant de l'axe X suivant une distance supérieure à celle des pattes d'entrainement 51, 51A, 51B, 52 par rapport à l'axe X.

En particulier, les excroissances 19 sont ici en appui sur la zone centrale des bras 46, soit ici sur une zone s'étendant chacune sur environ 30% de la longueur séparant les deux extrémités radialement interne et externe dudit bras et située entre les deux extrémités dudit bras. En particulier, cette zone centrale d'un bras 46 est située à équidistance des deux extrémités radialement interne et externe dudit bras.

Selon un autre mode non illustré, les excroissances 19 de la rondelle élastique 15 de charge peuvent se développer radialement au-delà des pattes d'entrainement, de sorte à venir en appui sur la périphérie radialement externe des bras 46. L'appui des excroissances est alors formé au plus loin de l'axe X

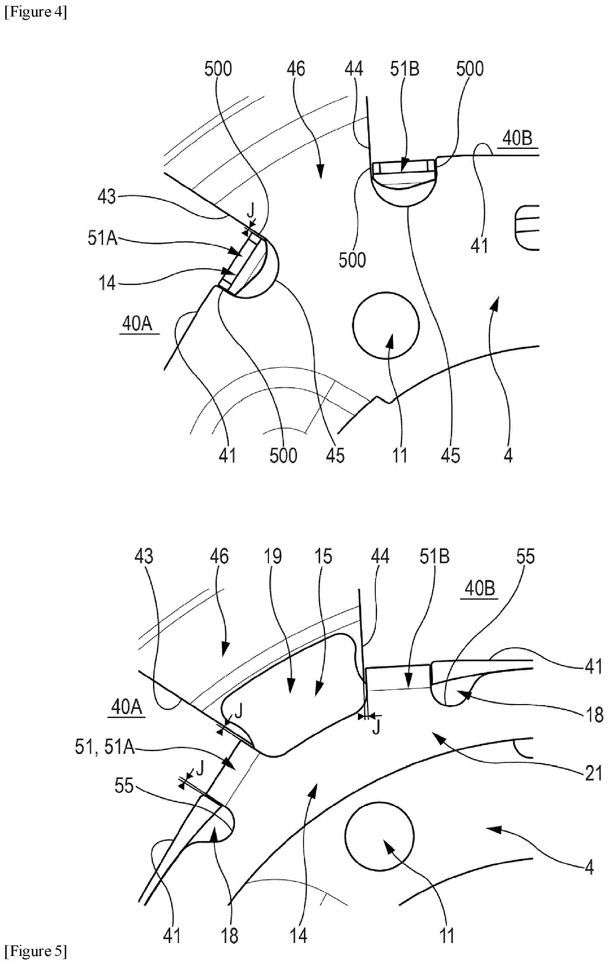

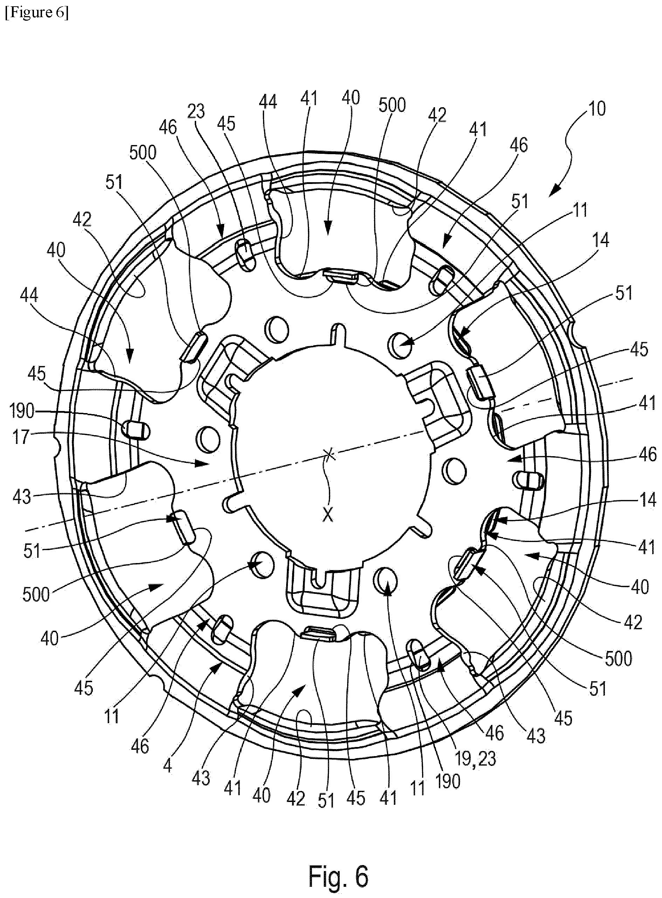

De manière avantageuse, la zone centrale de chaque bras comprend un embouti, ici de forme convexe ou courbé vers l'extérieur, pour venir comprimer les ressorts 9, notamment les ressorts intérieurs. A titre d'exemple sur les FIGURES 5 et 6, la zone centrale des bras 46 comprend les emboutis, sur lesquels les excroissances 19 peuvent prendre appui, de sorte que lesdits bras 46 assure par exemple leur centrage.

De manière avantageuse, chaque évidement 40 de la rondelle latérale 4 reçoit au moins une patte d'entrainement 51, 52. Lesdites pattes d'entrainement 51 ou 52 sont montées solidairement en rotation des évidements 40 de la rondelle latérale 4. Suivant la profondeur de l'évidement 40, au moins l'une des pattes d'entrainement 51, 52 peut traverser l'un des évidements 40.

Les pattes d'entrainement 51, 52 sont disposées sur le diamètre extérieur de la rondelle de frottement 14. Dans les exemples illustrés, les pattes d'entrainement 51, 52 sont identiques entre elles, préférentiellement de formes simple et suffisamment robustes, par exemple de petites dimensions.

En variante non illustrée, au moins deux pattes d'entraînement 51, 52 peuvent être de formes et/ou de dimensions différentes, en fonction de l'encombrement et des pièces avoisinantes.

En variante non illustrée, chaque patte d'entrainement 51, 52 (définie entre ses deux tranches 500 opposées) peut avoir sensiblement la moitié de la largeur angulaire de l'évidement 40, ou encore une largeur angulaire identique à celle de l'évidement 40.

De préférence, chaque patte d'entrainement 51 ou 52 est en appui circonférentiel contre un bord 41, 43 ou 44 de l'évidement 40. Dès lors, chaque patte d'entrainement 51 ou 52, est solidarisée en rotation avec la rondelle latérale 4, dans un premier sens de rotation relative. L'appui circonférentiel d'une patte d'entrainement 51 ou 52 est formé au niveau de la tranche 500. En d'autres termes, la tranche 500 de l'au moins une patte d'entrainement 51 ou 52 définit une surface d'appui coopérant contre la rondelle latérale 4. Dès lors, les pattes d'entrainement 51 ou 52 et les bras 46 sont disposés circonférentiellement par alternance autour de l'axe de rotation X.

Dans le premier exemple des FIGURES 1 à 5, la rondelle de frottement 14 comprend douze pattes d'entrainement 51. Les douze pattes d'entrainement 51 sont réparties suivant une répartition régulière autour de l'axe de rotation X, comme illustré notamment FIGURE 3. Les pattes d'entrainement 51 sont issues de matière avec la rondelle de frottement 14.

Préférentiellement, les pattes d'entrainement 51, 52 sont obtenues par emboutissage ou pliage d'une tôle découpée. Le pliage est réalisé selon un certain angle, par exemple selon un angle de 90 degrés. Dans une telle situation, chacune des pattes d'entrainement 51 s'étend sensiblement perpendiculairement par rapport au plan de la portion annulaire de frottement 21. En complément ou en variante, la surface d'appui de la patte d'entrainement 51 ou 52 peut être obtenue par usinage.

Dans le premier mode de réalisation, les pattes d'entrainement 51 s'étendent sur une valeur angulaire de sept degrés environ, entre ses deux tranches 500 opposées. Deux pattes 51 s'étendent au sein d'un même évidemment 40, soit deux pattes 51 par évidemment 40. Les pattes d'entrainement 51 et les excroissances 19 sont disposées circonférentiellement par alternance autour de l'axe de rotation X, par exemple sur la FIGURE 3.

Dans les exemples illustrés, l'évidement 40 comprend, sur son bord radialement intérieur 41, au moins une cavité 45 d'arrêt en rotation. Une cavité 45 reçoit l'une des pattes d'entrainement 51, 52. De préférence, chaque cavité 45 d'un évidemment 40 reçoit une patte d'entrainement 51, 52. En d'autres termes, chaque patte d'entraînement 51, 52 est disposée en regard et reçue à l'intérieur d'une cavité 45 de l'évidement correspondant. Grâce aux cavités, les évidements peuvent accueillir les pattes d'entrainement en plus des ressorts.

Sur d'autres modes non illustrés, les cavités pourraient être formées dans les bords latéraux 43 44.

En particulier dans le premier mode, les surfaces d'appui desdites pattes 51 s'étendent parallèlement entre elles. Les pattes 51 qui sont insérées dans un même évidemment 40, présentent ainsi une même orientation de leur surface d'appui ou peuvent être alignées entre elles. Par exemple, elles peuvent être inscrites dans un plan P, le plan P est parallèle à l'axe de rotation X.

Dans le premier mode, les pattes d'entrainement 51 sont réparties par paires. Les pattes d'une même paire de pattes 51 sont insérées par exemple l'une et l'autre dans deux évidements 40 différents et adjacents. Chaque paire de pattes d'entrainement 51 comprend d'une part, une première patte d'entrainement 51 en appui contre un bord latéral d'un premier évidement 40 et, d'autre part, une deuxième patte d'entraînement en appui contre un bord latéral d'un deuxième évidement 40 voisin du premier évidement 40. Ces deux bords latéraux délimitent circonférentiellement un bras 46.

En variante non illustrée, au moins une paire de pattes d'entraînement 51, 52 peut être insérée au sein d'un même évidement 40. De manière préférée, les paires ou groupements de pattes 51 sont agencés en fonction de la répartition desdites cavités 45 correspondantes, ce qui améliore l'arrêt en rotation desdites pattes 51 ainsi que la liaison solidaire des pièces 14, 15 avec la rondelle latérale 4.

Dans le premier mode de réalisation, chaque évidemment 40 comprend deux cavités 45. De préférence, comme on peut le voir sur les FIGURES 4 à 5, un jeu de montage J est ménagé entre la cavité 45 et la patte d'entrainement 51 afin de faciliter l'insertion de chaque patte d'entrainement 51dans la cavité correspondantes 45. Les cavités 45 sont espacées l'une de l'autre. Les deux cavités 45 d'un évidement 40 sont délimitées ici par les deux extrémités du bord radialement intérieur 41, comme illustrées par exemple aux FIGURES 4 à 5.

Comme illustrée sur les FIGURES 4 à 5, pour chaque paire de pattes, une première patte d'entraînement 51A est en appui contre un premier évidement 40A, plus précisément au niveau d'un de ses bords latéraux 43afin d'assurer le blocage en rotation dans un premier sens de rotation angulaire autour de l'axe X. De manière précise, l'une des deux tranches 500 de ladite première patte d'entraînement 51A, est en appui contre le bord latéral 43 du premier évidement 40.

De même, pour chaque paire de pattes, une deuxième patte d'entrainement 51B est en appui contre un deuxième évidement 40B, plus précisément au niveau d'un de ses bords latéraux 44 afin d'assurer le blocage en rotation dans le second sens de rotation angulaire autour de l'axe X. De manière précise, l'une des deux tranches 500 de ladite deuxième patte d'entrainement 51B, est en appui contre le bord latéral 44 du deuxième évidement 40.

Dans le premier mode de réalisation, un bord latéral de la cavité recevant la première patte 51A est formé par le bord latéral 43 de l'évidement. La cavité est formée de manière à ce que chaque patte soit en fait bloquée dans les deux sens de rotation. On voit en effet sur la FIGURE 4 que ladite première patte d'entrainement 51A est également en appui dans le premier évidement 40, contre un bord de la cavité 45 opposée au bord latéral 43 de l'évidement 40. Ceci assure donc aussi le blocage en rotation de ladite première patte d'entrainement 51 dans un deuxième sens de rotation angulaire, opposé au premier sens de rotation et autour de l'axe X. En résumé, cette première patte d'entrainement 51 est bloquée dans les deux sens de rotation relatives opposées.

La deuxième patte d'entraînement 51B est en appui contre le deuxième évidement 40B, plus précisément contre un de ses bords latéraux 44, afin d'assurer un blocage en rotation dans le deuxième sens de rotation angulaire, opposé au premier sens de rotation et autour de l'axe X.

Un bord latéral de la cavité recevant la deuxième patte 51B est formé par le bord latéral 44 de l'évidement 40B. La cavité est formée de manière à ce que chaque patte soit en fait bloquée dans les deux sens de rotation. On voit en effet sur la FIGURE 4 que ladite deuxième patte d'entrainement 51B est également en appui dans le deuxième évidement 40, contre un bord de la cavité 45 opposé au bord latéral 44 de l'évidement 40B. De cette manière, les cavités 45 sont avantageusement disposées suivant les sens de blocage en rotation du dispositif de frottement 10. Dans les exemples illustrés, les paires ou groupes de pattes 51 sont délimitées par des oeillères ou échancrures 55 aptes à simplifier le pliage desdites pattes.

Chaque patte d'entrainement 51 peut être de forme complémentaire à celle de la cavité 45 correspondante. Les cavités 45 sont de forme concave, par exemple en arc de cercle ou de demi-lune. De préférence, les cavités 45 des évidements 40 sont identiques, notamment dans le cas de pattes 51de dimension et taille identiques. En variante non illustrée, les cavités 45 peuvent être de forme rectangulaire, par exemple une rainure ou une gorge. Dans une autre variante non illustrée, au moins deux cavités 45 peuvent être de formes et/ou de dimensions différentes.

On a décrit sur les FIGURES 6 à 7, un deuxième mode de réalisation de l'invention sensiblement similaire au premier mode de réalisation, à l'exception du fait qu'une seule cavité 45 est mise en oeuvre par évidement 40. En particulier, la rondelle de frottement 14 comprend six pattes d'entrainement 51, insérées dans six cavités 45. En d'autres termes, une seule patte 51, 52 s'étend au sein d'un évidemment 40.

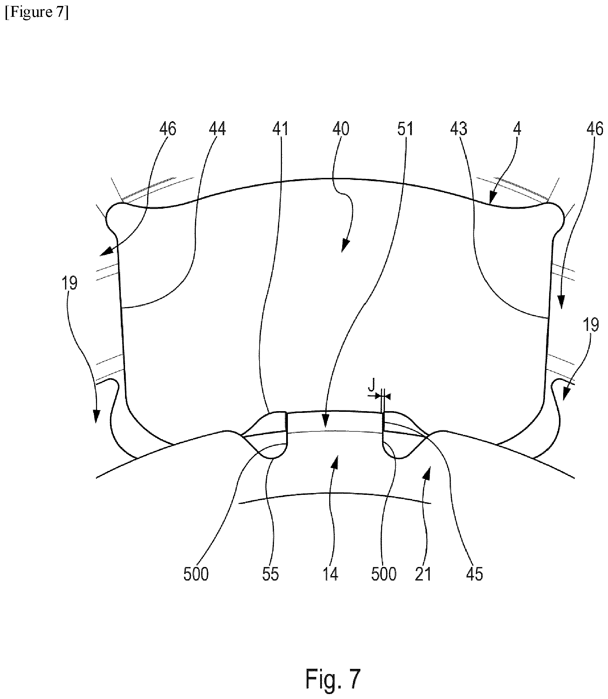

Dans ce deuxième mode de réalisation, chaque cavité 45 est disposée sur une zone centrale du bord radialement intérieur 41 de l'évidement 40, comme illustrée FIGURE 7. En particulier, les cavités 45 sont de forme rectangulaire, sous forme de rainure. On entend par « zone centrale » une zone s'étendant sensiblement sur 30% de la longueur séparant les deux extrémités dudit bord 41 et englobant le point équidistant aux deux extrémités dudit bord 41.

Les pattes d'entrainement 51 sont aussi identiques entre elles, cependant dans le deuxième mode, elles s'étendent sur une valeur angulaire de dix degrés environ entre leurs deux tranches opposées 500. Dans l'exemple de la FIGURE 6, les pattes d'entrainement 51 sont angulairement régulièrement réparties autour de l'axe de rotation X.

Par ailleurs, la rondelle latérale 4 comprend une pluralité de trous 190, ici au nombre de six, ménagés dans les bras 46, dans lesquels sont reçues en partie les excroissances 19, en particulier les languettes de couplage 23. Chaque excroissance 19 comprend par exemple une languette de couplage 23.

Notamment, chaque trou 190 reçoit une languette de couplage 23. Tel qu'illustré sur la FIGURE 6, lesdits trous 190 sont formés sur la zone centrale desdits bras 46, dans lesquels les languettes de couplage 23 des excroissances 19 sont reçues. La rondelle élastique 15 de charge comprend six languettes de couplage 23, formées depuis les excroissances 19 et adaptées à coopérer avec les trous 190 des bras 46.

En variante non illustrée, au moins l'une des cavités 45 peut être disposée sur une zone d'extrémité du bord radialement intérieur 41.

Dans une autre variante non illustrée, au moins l'une des cavités 45 peut être disposée sur une zone d'extrémité radialement interne du bord latéral.

Dans une autre variante non illustrée, deux cavités 45 peuvent être chacune étant sur l'un des deux bords latéraux 43, 44 de l'évidement 40, et donc circonférentiellement opposées.

On a décrit sur la FIGURE 8, un troisième mode de réalisation de l'invention. Ici les pattes d'entrainement 52 sont formées sur la rondelle élastique 15 de charge. La rondelle élastique 15 comprend ici douze pattes d'entrainement 52, issues de matière avec la portion annulaire de rondelle élastique 15. Les douze pattes d'entrainement 52 sont destinées à coopérer avec la rondelle latérale 4 pour rendre la rondelle élastique 15 solidaire en rotation de la rondelle latérale 4. De manière plus précise, chaque excroissance 19 de la rondelle élastique 15 comprend deux pattes d'entrainement 52 opposées, pouvant être disposées en regard l'une de l'autre.

Dans le troisième mode, les pattes d'entrainement 52 sont disposées entre les diamètres intérieur et extérieur des excroissances 19, notamment en partant de l'un de ses bords latéraux. Dès lors, les pattes 52 sont en appui sur les bords latéraux 43 44 des évidements 40 correspondants. Dans l'exemple illustré, chaque patte n'assure un blocage en rotation que dans un seul sens mais les deux pattes 52 de chaque excroissance 19 forment ensemble une paire de pattes apte à assurer un blocage en rotation dans les deux sens de rotation relatifs. De même, chaque évidement 40 comprend deux cavités 45 délimitées au niveau des deux extrémités du bord radialement intérieur 41. Dès lors, la rondelle élastique 15 est montée solidaire en rotation de la rondelle latérale 4 grâce aux douze pattes d'entrainement 52 insérées dans les douze cavité 45 de la rondelle latérale 9.

Dans le troisième mode de réalisation, chaque excroissance 19 de ladite rondelle élastique 15 comporte, en outre, au moins un orifice de couplage 20. La rondelle de frottement 14 comporte de plus quatre languettes de couplage 23, par exemple six languettes de couplage illustrées sur la FIGURE 8, chacune s'étendant sensiblement perpendiculairement par rapport au plan de la portion annulaire de frottement 21. Chaque orifice de couplage 20 est traversé par une languette de couplage 23 de la rondelle de frottement 14 de façon à bloquer en rotation la rondelle de frottement 14 par rapport à la rondelle élastique 15 de charge. La rondelle élastique 15 de charge presse donc la rondelle de frottement 14 contre le disque central 7, en s'appuyant, grâce à ses excroissances 19, contre la rondelle latérale 4.

Les languettes de couplage 23 de la rondelle de frottement 14 traversent les orifices de couplage 20 de la rondelle élastique de charge 15 comme montré sur la FIGURE 8. Les languettes de couplage 23 traversent aussi des orifices de passage 24 pratiqués dans la rondelle latérale 4.

De préférence, chaque excroissance 19 présente une largeur sensiblement égale à la largeur du bras 46. Par ailleurs, les orifices de passage 24 sont de largeur supérieure aux languettes de couplage 23 afin que les languettes de couplage 23 puissent traverser librement les orifices de passage 24 sans toucher les bords. La largeur s'étend ici dans la direction circonférentielle. Les orifices de passage 24 n'interfèrent ainsi pas avec les languettes de couplage 23, ils ne contribuent pas à rendre solidaire en rotation les deux rondelles 14, 15. Les orifices de passage 24 permettent seulement le passage des languettes de couplage 23 pour que ces dernières ne butent pas axialement sur la rondelle latérale 4 lorsque la rondelle élastique de charge 15 est comprimée contre la rondelle latérale 4.

Dès lors, la rondelle de frottement 14 est solidaire en rotation de la rondelle élastique de charge 15 grâce aux languettes de couplage 23 qui sont ajustées en largeur dans les orifices de couplage 20 de la rondelle élastique de charge 15. Par exemple, les orifices de couplage 20 ont un contour sensiblement rectangulaire pour procurer un contact plan sur plan avec les tranches des languettes de couplage 23 qui sont montées ajustées, voire légèrement serrées, dans les orifices de couplage 20 afin de garantir l'entrainement en rotation d'une rondelle par l'autre dans les deux sens de rotation. De cette manière, la rondelle de frottement 14 est donc montée solidaire en rotation de la rondelle latérale 4 par l'intermédiaire de la rondelle élastique 15.

Bien entendu, toutes les caractéristiques de la rondelle latérale 4 présentées dans les exemples, sont applicables mutadis mutandis à l'autre rondelle latérale 5.

Bien entendu, la présente invention n'est pas limitée aux modes de réalisation décrits et représentés, fournis à titre d'exemple illustratif et non limitatif.

## Revendications

1. Dispositif de frottement (10), pour un amortisseur de torsion (100) comprenant un premier élément tournant (4) et un deuxième élément tournant (7) mobiles en rotation l'un par rapport à l'autre autour d'un axe de rotation (X) et des ressorts (9) configurés pour s'opposer à une rotation relative entre le premier élément tournant (4) et le deuxième élément tournant (7) par rapport à l'axe de rotation (X),
le dispositif de frottement (10) comprenant :
- le premier élément tournant (4) qui comprend des évidements (40) agencés chacun pour recevoir au moins l'un des ressorts (9) de l'amortisseur de torsion,
- une rondelle élastique (15) de charge et une rondelle de frottement (14),
l'une au moins parmi la rondelle élastique (15) et la rondelle de frottement (14) comprend des pattes d'entrainement (51, 51A, 51B, 52) montées solidairement en rotation du premier élément tournant (4), la rondelle élastique (15) comprend une partie annulaire et une pluralité d'excroissances (19) prenant appui contre le premier élément tournant (4),
**caractérisé en ce que** au moins l'une des pattes d'entrainement (51, 51A, 51B, 52) est insérée dans l'un des évidements (40) du premier élément tournant (4).

2. Dispositif de frottement (10) selon la revendication 1, dans lequel chaque patte d'entrainement (51, 51A, 51B, 52) qui est insérée dans l'un des évidements (40) est en appui circonférentiel contre un bord (41, 43, 44) de l'évidement (40), de manière à solidariser en rotation ladite au moins une parmi la rondelle élastique (15) et la rondelle de frottement (14) avec le premier élément tournant (4) dans un premier sens de rotation relative.

3. Dispositif de frottement (10) selon l'une quelconque des revendications 1 à 2, dans lequel l'un au moins des évidements (40) comprend :
- un bord radialement intérieur (41),
- deux bords latéraux (43, 44),
et dans lequel au moins une portion du bord radialement intérieur ou une portion de l'un des bords latéraux délimite une cavité (45) recevant l'une des pattes d'entrainement.

4. Dispositif de frottement (10) selon la revendication 3, dans lequel au moins l'une des cavités (45) est disposée sur une zone centrale du bord radialement intérieur (41) de l'évidement (40), la zone centrale s'étendant sensiblement sur 30% de la longueur séparant les deux extrémités dudit bord radialement intérieur (41) et située entre les deux extrémités dudit bord radialement intérieur (41).

5. Dispositif de frottement (10) selon l'une quelconque des revendications 3 à 4, dans lequel ladite une des pattes d'entrainement (51, 51A, 51B, 52) est ajustée circonférentiellement dans la cavité correspondante de manière à d'une part, solidariser en rotation ladite au moins une parmi la rondelle élastique (15) et la rondelle de frottement (14) avec le premier élément tournant (4) dans le premier sens de rotation relative, et d'autre part, solidariser en rotation ladite au moins une parmi la rondelle élastique (15) et la rondelle de frottement (14) avec le premier élément (4,5) dans un deuxième sens de rotation relative opposé au premier sens de rotation relative.

6. Dispositif de frottement (10) selon l'une quelconque des revendications 1 à 5, dans lequel au moins une des pattes d'entrainement (51, 51A, 51B, 52) est disposée dans un évidement (40) du premier élément tournant (4), ladite patte d'entrainement (51, 51A, 51B, 52) étant agencée d'une part, pour solidariser en rotation ladite au moins une parmi la rondelle élastique (15) et la rondelle de frottement (14) avec ledit évidement (40) dans le premier sens de rotation relative, et
d'autre part, pour solidariser en rotation ladite au moins une parmi la rondelle élastique (15) et la rondelle de frottement (14) avec ledit évidement (40) dans un deuxième sens de rotation relative opposé au premier sens de rotation relative.

7. Dispositif de frottement (10) selon l'une quelconque des revendications 1 à 6, dans lequel le premier élément comprend une pluralité de bras (46), chaque bras (46) séparant deux évidements (40) adjacents.

8. Dispositif de frottement (10) selon la revendication 7, dans lequel, chaque excroissance (19) est en appui sur l'un des bras (46).

9. Dispositif de frottement (10) selon l'une quelconque des revendications 1 à 8, dans lequel ladite au moins une patte d'entrainement (51, 51A, 51B,) insérée dans l'un des évidements (40) du premier élément tournant (4) est formée sur la rondelle de frottement (14).

10. Dispositif de frottement (10) selon l'une quelconque des revendications 1 à 8, dans lequel ladite au moins une patte d'entrainement (52) insérée dans l'un des évidements (40) du premier élément tournant (4) est formée sur la rondelle élastique (15).

11. Dispositif de frottement (10) selon la revendication 10 prise en combinaison avec la revendication 8, dans lequel chaque excroissance (19) de ladite rondelle élastique (15) comprend au moins une patte d'entrainement (52).

12. Amortisseur de torsion (100) comprenant :
- un dispositif de frottement (10) selon l'une quelconque des revendications précédentes,
- un deuxième élément tournant (7) monté mobile en rotation autour d'un axe de rotation (X) par rapport au premier élément tournant (4) du dispositif de frottement (10),
- des ressorts (9) agencés dans les évidements (40) du premier élément tournant (4) et configurés pour s'opposer à une rotation relative entre le premier élément tournant (4) et le deuxième élément tournant (7) par rapport à l'axe de rotation (X),
dans lequel la rondelle de frottement (14) du dispositif de frottement est agencée pour frotter directement ou indirectement contre le deuxième élément tournant (7) lors d'une rotation relative entre le premier élément tournant (4) et le deuxième élément tournant (7).

## Patentansprüche

1. Reibvorrichtung (10) für einen Torsionsdämpfer (100), welcher ein erstes rotierendes Element (4) und ein zweites rotierendes Element (7), die relativ zueinander um eine Drehachse (X) drehbeweglich sind, und Federn (9), die dafür ausgelegt sind, einer relativen Drehung zwischen dem ersten rotierenden Element (4) und dem zweiten rotierenden Element (7) in Bezug auf die Drehachse (X) entgegenzuwirken, umfasst,
wobei die Reibvorrichtung (10) umfasst:
- das erste rotierende Element (4), welches Aussparungen (40) umfasst, die jeweils dazu eingerichtet sind, mindestens eine der Federn (9) des Torsionsdämpfers aufzunehmen,
- eine Druckfederscheibe (15) und eine Reibscheibe (14),
wobei wenigstens eine von der Federscheibe (15) und der Reibscheibe (14) Mitnahmelaschen (51, 51A, 51B, 52) umfasst, die mit dem ersten rotierenden Element (4) drehfest verbunden sind, wobei die Federscheibe (15) einen ringförmigen Teil und mehrere Vorsprünge (19), die sich an dem ersten rotierenden Element (4) abstützen, umfasst,
**dadurch gekennzeichnet, dass** mindestens eine der Mitnahmelaschen (51, 51A, 51B, 52) in eine der Aussparungen (40) des ersten rotierenden Elements (4) eingefügt ist.

2. Reibvorrichtung (10) nach Anspruch 1, wobei jede Mitnahmelasche (51, 51A, 51B, 52), welche in eine der Aussparungen (40) eingefügt ist, an einem Rand (41, 43, 44) der Aussparung (40) am Umfang anliegt, so dass sie die wenigstens eine von der Federscheibe (15) und der Reibscheibe (14) mit dem ersten rotierenden Element (4) in einer ersten relativen Drehrichtung drehfest verbindet.

3. Reibvorrichtung (10) nach einem der Ansprüche 1 bis 2, wobei die mindestens eine der Aussparungen (40) umfasst:
- einen radial inneren Rand (41),
- zwei seitliche Ränder (43, 44),
und wobei mindestens ein Abschnitt des radial inneren Randes oder ein Abschnitt eines der seitlichen Ränder eine Vertiefung (45) begrenzt, die eine der Mitnahmelaschen aufnimmt.

4. Reibvorrichtung (10) nach Anspruch 3, wobei mindestens eine der Vertiefungen (45) in einem mittleren Bereich des radial inneren Randes (41) der Aussparung (40) angeordnet ist, wobei sich der mittlere Bereich im Wesentlichen über 30 % der Länge erstreckt, welche die zwei Enden des radial inneren Randes (41) trennt, und sich zwischen den zwei Enden des radial inneren Randes (41) befindet.

5. Reibvorrichtung (10) nach einem der Ansprüche 3 bis 4, wobei die eine der Mitnahmelaschen (51, 51A, 51B, 52) in der entsprechenden Vertiefung in Umfangsrichtung eingestellt ist, um
einerseits die wenigstens eine von der Federscheibe (15) und der Reibscheibe (14) mit dem ersten rotierenden Element (4) in der ersten relativen Drehrichtung drehfest zu verbinden, und
andererseits die wenigstens eine von der Federscheibe (15) und der Reibscheibe (14) mit dem ersten Element (4, 5) in einer zweiten relativen Drehrichtung drehfest zu verbinden, die zu der ersten relativen Drehrichtung entgegengesetzt ist.

6. Reibvorrichtung (10) nach einem der Ansprüche 1 bis 5, wobei mindestens eine der Mitnahmelaschen (51, 51A, 51B, 52) in einer Aussparung (40) des ersten rotierenden Elements (4) angeordnet ist, wobei diese Mitnahmelasche (51, 51A, 51B, 52) dazu eingerichtet ist,
einerseits die wenigstens eine von der Federscheibe (15) und der Reibscheibe (14) mit der Aussparung (40) in der ersten relativen Drehrichtung drehfest zu verbinden, und andererseits die wenigstens eine von der Federscheibe (15) und der Reibscheibe (14) mit der Aussparung (40) in einer zweiten relativen Drehrichtung drehfest zu verbinden, die zu der ersten relativen Drehrichtung entgegengesetzt ist.

7. Reibvorrichtung (10) nach einem der Ansprüche 1 bis 6, wobei das erste Element mehrere Arme (46) umfasst, wobei jeder Arm (46) zwei benachbarte Aussparungen (40) trennt.

8. Reibvorrichtung (10) nach Anspruch 7, wobei jeder Vorsprung (19) an einem der Arme (46) anliegt.

9. Reibvorrichtung (10) nach einem der Ansprüche 1 bis 8, wobei die mindestens eine Mitnahmelasche (51, 51A, 51B), die in eine der Aussparungen (40) des ersten rotierenden Elements (4) eingefügt ist, an der Reibscheibe (14) ausgebildet ist.

10. Reibvorrichtung (10) nach einem der Ansprüche 1 bis 8, wobei die mindestens eine Mitnahmelasche (52), die in eine der Aussparungen (40) des ersten rotierenden Elements (4) eingefügt ist, an der Federscheibe (15) ausgebildet ist.

11. Reibvorrichtung (10) nach Anspruch 10 in Kombination mit Anspruch 8, wobei jeder Vorsprung (19) der Federscheibe (15) mindestens eine Mitnahmelasche (52) umfasst.

12. Torsionsdämpfer (100), welcher umfasst:
- eine Reibvorrichtung (10) nach einem der vorhergehenden Ansprüche,
- ein zweites rotierendes Element (7), das drehbeweglich um eine Drehachse (X) in Bezug auf das erste rotierende Element (4) der Reibvorrichtung (10) angebracht ist,
- Federn (9), die in den Aussparungen (40) des ersten rotierenden Elements (4) angeordnet sind und dafür ausgelegt sind, einer relativen Drehung zwischen dem ersten rotierenden Element (4) und dem zweiten rotierenden Element (7) in Bezug auf die Drehachse (X) entgegenzuwirken,
wobei die Reibscheibe (14) der Reibvorrichtung dazu eingerichtet ist, bei einer relativen Drehung zwischen dem ersten rotierenden Element (4) und dem zweiten rotierenden Element (7) direkt oder indirekt an dem zweiten rotierenden Element (7) zu reiben.

## Claims

1. Friction device (10), for a torsion damper (100) comprising a first rotating element (4) and a second rotating element (7) which are able to rotate with respect to one another about an axis of rotation (X), and springs (9) configured to oppose a relative rotation between the first rotating element (4) and the second rotating element (7) with respect to the axis of rotation (X),
the friction device (10) comprising:
- the first rotating element (4) which comprises apertures (40) each designed to receive at least one of the springs (9) of the torsion damper,
- an elastic load washer (15) and a friction washer (14),
at least one among the elastic washer (15) and the friction washer (14) comprising drive tabs (51, 51A, 51B, 52) mounted so as to be locked in rotation with the first rotating element (4), the elastic washer (15) comprising an annular part and a plurality of protuberances (19) bearing against the first rotating element (4), **characterized in that** at least one of the drive tabs (51, 51A, 51B, 52) is inserted into one of the apertures (40) of the first rotating element (4).

2. Friction device (10) according to Claim 1, in which each drive tab (51, 51A, 51B, 52) which is inserted into one of the apertures (40) bears circumferentially against an edge (41, 43, 44) of the aperture (40) so as to rotationally secure said at least one among the elastic washer (15) and the friction washer (14) with the first rotating element (4) in a first direction of relative rotation.

3. Friction device (10) according to either one of Claims 1 and 2, in which at least one of the apertures (40) comprises:
- a radially inner edge (41),
- two lateral edges (43, 44),
and in which at least one portion of the radially inner edge or a portion of one of the lateral edges delimits a cavity (45) receiving one of the drive tabs.

4. Friction device (10) according to Claim 3, in which at least one of the cavities (45) is arranged on a central region of the radially inner edge (41) of the aperture (40), the central region extending substantially over 30% of the length separating the two ends of said radially inner edge (41) and being situated between the two ends of said radially inner edge (41).

5. Friction device (10) according to either one of Claims 3 and 4, in which said one of the drive tabs (51, 51A, 51B, 52) is fitted circumferentially in the corresponding cavity so as,
on the one hand, to rotationally secure said at least one among the elastic washer (15) and the friction washer (14) with the first rotating element (4) in the first direction of relative rotation, and,
on the other hand, to rotationally secure said at least one among the elastic washer (15) and the friction washer (14) with the first element (4, 5) in a second direction of relative rotation opposed to the first direction of relative rotation.

6. Friction device (10) according to any one of Claims 1 to 5, in which at least one of the drive tabs (51, 51A, 51B, 52) is arranged in an aperture (40) of the first rotating element (4), said drive tab (51, 51A, 51B, 52) being designed,
on the one hand, to rotationally secure said at least one among the elastic washer (15) and the friction washer (14) with said aperture (40) in the first direction of relative rotation, and,
on the other hand, to rotationally secure said at least one among the elastic washer (15) and the friction washer (14) with said aperture (40) in a second direction of relative rotation opposed to the first direction of relative rotation.

7. Friction device (10) according to any one of Claims 1 to 6, in which the first element comprises a plurality of arms (46), each arm (46) separating two adjacent apertures (40).

8. Friction device (10) according to Claim 7, in which each protuberance (19) bears on one of the arms (46).

9. Friction device (10) according to any one of Claims 1 to 8, in which said at least one drive tab (51, 51A, 51B) inserted into one of the apertures (40) of the first rotating element (4) is formed on the friction washer (14) .

10. Friction device (10) according to any one of Claims 1 to 8, in which said at least one drive tab (52) inserted into one of the apertures (40) of the first rotating element (4) is formed on the elastic washer (15).

11. Friction device (10) according to Claim 10 taken in combination with Claim 8, in which each protuberance (19) of said elastic washer (15) comprises at least one drive tab (52).

12. Torsion damper (100) comprising:
- a friction device (10) according to any one of the preceding claims,
- a second rotating element (7) mounted so as to be able to rotate about an axis of rotation (X) with respect to the first rotating element (4) of the friction device (10),
- springs (9) arranged in the apertures (40) of the first rotating element (4) and configured to oppose a relative rotation between the first rotating element (4) and the second rotating element (7) with respect to the axis of rotation (X),
in which the friction washer (14) of the friction device is designed to rub directly or indirectly against the second rotating element (7) during a relative rotation between the first rotating element (4) and the second rotating element (7).
